(19) Europäisches Patentamt
European Patent Office
Office européen des brevets

(11) EP 4 011 941 A1

(12) **EUROPÄISCHE PATENTANMELDUNG**

(43) Veröffentlichungstag:
**15.06.2022 Patentblatt 2022/24**

(21) Anmeldenummer: **21211863.2**

(22) Anmeldetag: **02.12.2021**

(51) Internationale Patentklassifikation (IPC):
***C08G 77/46*** *(2006.01)* ***C08L 75/04*** *(2006.01)*
***C08L 83/04*** *(2006.01)* ***C08L 83/12*** *(2006.01)*
***C08J 9/12*** *(2006.01)*

(52) Gemeinsame Patentklassifikation (CPC):
(C-Sets verfügbar)
**C08G 77/46; C08J 9/122; C08L 75/04; C08L 83/04; C08L 83/12;** C08G 77/12; C08G 77/16; C08G 77/20
(Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2020 EP 20212983**

(71) Anmelder: **Evonik Operations GmbH**
**45128 Essen (DE)**

(72) Erfinder:
- **Ferenz, Michael**
  **45147 Essen (DE)**
- **Klostermann, Michael**
  **45141 Essen (DE)**
- **Feldmann, Kai-Oliver**
  **45133 Essen (DE)**
- **Schnell, Petra**
  **45309 Essen (DE)**
- **Eckhoff, Michelle**
  **45357 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **POLYETHER-SILOXAN BLOCK-COPOLYMERE FÜR DIE HERSTELLUNG VON POLYURETHANSCHAUMSTOFFEN**

(57) Ein Verfahren zur Herstellung von Polyether-Siloxan-Blockcopolymeren durch Hydrosilylierung von alpha-omega modifizierten Wasserstoff-Siloxanen mit alpha-omega modifizierten Di-(Meth)Allyl-Polyethern in Gegenwart eines Hydrosilylierungskatalysators, wobei die Reaktion in einem Lösemittelgemisch, umfassend aromatische Lösemittel, Polyether sowie alkoxylierter Alkohol, durchgeführt wird, wird beschrieben.

EP 4 011 941 A1

(52) Gemeinsame Patentklassifikation (CPC): (Forts.)

C-Sets
**C08L 83/04, C08L 71/02, C08K 5/56, C08K 5/01**

## Beschreibung

Die vorliegende Erfindung liegt auf dem Gebiet der Polyethersiloxane, Schaumstoffe und Polyurethanschäume.

Sie betrifft insbesondere die Herstellung spezieller Polyether-Siloxan-Block-Copolymerer sowie deren Verwendung zur Herstellung von Polyurethanschaumstoffen, bevorzugt von mechanisch geschäumten Polyurethanschaumstoffen.

Mechanisch aufgeschäumte Polyurethanschaumstoffe werden ohne die Verwendung eines physikalischen oder chemischen Treibmittels hergestellt und finden breite Anwendung in verschiedensten Beschichtungsprozessen. So werden sie z.B. zur Rückseitenhinterschäumung von Teppichen und Kunstrasen, zur Herstellung von Flächendichtungen und sogenannten gap fillern beispielsweise elektonischen Bauteilen, sogenannten Batteriepads in Lithiumionenbatterie-Stacks, als Trittschalldämmung für Bodenbeläge sowie im Bereich Klebebeschichtungen verwendet. Die Herstellung entsprechender Schaumstoffe erfolgt typischer Weise durch mechanisches Aufschäumen eines Polyol-Isocyanat-Gemisches, wobei Luft oder Stickstoff unter hohem Schereintrag in die Polyol-Isocyanat-Mischung eingeschlagen werden. Die so hergestellte Schaummasse kann anschließend auf ein beliebiges Substrat, z.B. eine Teppichrückseite oder ein Trennpapier, gestrichen und bei erhöhten Temperaturen ausgehärtet werden. Bedingt durch ihre Herstellung werden mechanisch aufgeschäumte Polyurethanschäume in Fachkreisen auch als Schlagschäume bezeichnet. Der Begriff des Schlagschaums wird in eben dieser Weise auch für die vorliegende Erfindung gebraucht.

Für alle oben genannten Anwendungen ist wichtig, dass während des mechanischen Aufschäumens ein möglichst feinzelliger Schaum erhalten wird. Zusätzlich ist erforderlich, dass der Schaum eine hohe Stabilität aufweist, da so Schaumdefekte während des anschließenden Beschichtungs- und Trocknungsvorgangs vermieden werden können. Aus diesem Grund ist es üblich, der Polyol-Isocyanat-Mischung vor bzw. während des mechanischen Aufschäumens Schaumstabilisatoren zuzusetzen, wobei sich für diese Anwendung insbesondere Polyether-Siloxan Block-Copolymere als besonders effizient erwiesen haben. In der Regel zeichnen sich diese Stabilisatoren durch eine lineare $[AB]_n$ Blockstruktur aus alternierenden Polyether- und Siloxanketten aus. Die Wirksamkeit als Schaumstabilisator ist hierbei umso höher, je höher das Molekulargewicht dieser Verbindungen ist. Nicht hydrolysierbare $[AB]_n$-Polyethersiloxane sind dem Fachmann bekannt. Zum Beispiel sind in US 3957842 solche Polymere beschrieben. Jenes Patent beschreibt die Herstellung dieser Strukturen durch die Hydrosilylierung von Diallypolyethern mit $\alpha,\omega$-SiH-funktionellen Siloxanen in Toluol. Das Molekulargewicht der erhaltenen Polymere beträgt etwa 36 000 - 56 000 g/mol.

US 4150048 beschreibt nicht hydrolysierbare $[AB]_n$ -Polyethersiloxane, die durch Hydrosilylierung von Polyethern mit zwei $CH_2=C(R)CH_2$- Endgruppen pro Molekül hergestellt werden, wobei R eine einwertige Kohlenwasserstoffgruppe ist. Sie werden mit $\alpha,\omega$-SiH-funktionellen Siloxanen unter Hydrosilylierungsreaktionsbedingungen in Gegenwart eines Platinkatalysators hergestellt. Die hergestellten linearen Blockcopolymere sind besonders nützlich als Tenside und Schaumstabilisatoren für die Herstellung von Polyurethanschäumen. Die geringe Neigung zur Isomerisierung der $CH_2=C(R)CH_2$-Gruppe zu nicht reaktiven Spezies während der Hydrosilylierungsreaktion führt zu dem unerwartet hohen Molekulargewicht der Copolymere.

In US 5869727 wird ein Vakuumverfahren zur Herstellung von Siloxan-Oxyalkylen-Copolymeren beschrieben.

US 20190233646 beschreibt eine Zusammensetzung mit $[AB]_n$ -Polyethersiloxanen. Die Zusammensetzung umfasst ein Polyether-Polysiloxan-Blockcopolymer und eine flüssige organische Monoolverbindung, die entweder eine Glykoletherverbindung mit einem niedrigen Polymerisationsgrad, einem endständigen Wasserstoff oder eine Alkoholverbindung mit einer verzweigten Alkylgruppe mit 12 oder mehr Kohlenstoffatomen ist.

Wie bereits beschrieben, ist ein hohes Molgewicht für die Bereitstellung von besonders wirksamen Schaumstabilisatoren für mechanisch geschäumte Polyurethanschäume wichtig und daher besonders wünschenswert. Ein zu geringes Molgewicht des Schaumstabilisators würde hierbei zu einer verminderten schaumstabilisierenden Wirkung führen, wodurch grobe und irreguläre Schäume entstehen würden. Darüber hinaus wäre durch den Einsatz eines niedermolekularen Schaumstabilisators der Dichtebereich, in welchem sich ein mechanisch geschäumter Polyurethanschäum herstellen ließe, eingeschränkt, wobei insbesondere die Herstellung von niedrigdichten (< 400 g/L) Schäumen problematisch wäre. Neben einem möglichst hohen Molekulargewicht des Schaumstabilisators ist jedoch auch wichtig, dass die Molgewichtsverteilung möglichst eng ist. Vor allem ein Tailing der Molgewichtsverteilung zu sehr hohen Molgewichten kann sich nachteilig auswirken. Durch ein solches Tailing kann die Viskosität des Schaumstabilisators sehr hoch werden, wodurch dessen Verarbeitbarkeit während der Schaumherstellung stark beeinträchtigt ist.

Aufgabe der vorliegenden Erfindung war daher die Bereitstellung von Polyether-Siloxan-BlockCopolymeren, welche sich durch ein besonders hohes Molekulargewicht bei gleichzeitig möglichst enger Molgewichtsverteilung auszeichnen und hiermit verbunden eine besonders effiziente Wirksamkeit als Schaumstabilisator auszeichnen.

Überraschenderweise wurde gefunden, dass die Verwendung eines bestimmten Lösemittelgemisches die Herstellung entsprechender Polyether-Siloxan-Blockcopolymerer und damit die Lösung der genannten Aufgabe ermöglicht.

Gegenstand der vorliegenden Erfindung ist daher ein Verfahren zur Herstellung von Polyether-Siloxan-Blockcopolymeren nach Formel 1

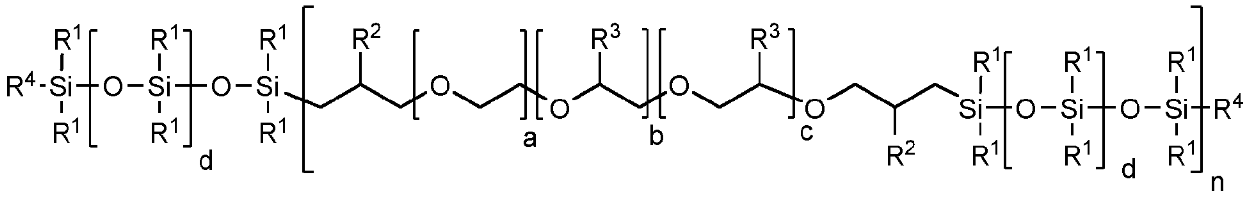

Formel 1

wobei

a = 0 bis 100, bevorzugt 5 bis 75, besonders bevorzugt 10 bis 50,
b = 0 bis 100, bevorzugt 5 bis 75, besonders bevorzugt 5 bis 25,
c = 0 bis 100, bevorzugt 5 bis 75, besonders bevorzugt 5 bis 25,
a + b + c > 3,
d = 1 bis 100, bevorzugt 5 bis 50 besonders bevorzugt 7 bis 30 ganz besonders bevorzugt 8 - 20 ist,
n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,

und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,

und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind,

und wobei die Reste $R^4$ unabhängig ausgewählt sind aus einem der Reste $R^5$, $R^6$, $R^7$ oder H, wobei die Reste $R^5$ der Formel 2 entsprechen

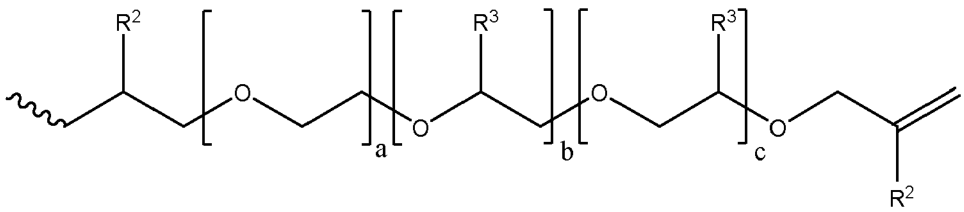

Formel 2,

und wobei die Reste $R^6$ der Formel 3 entsprechen

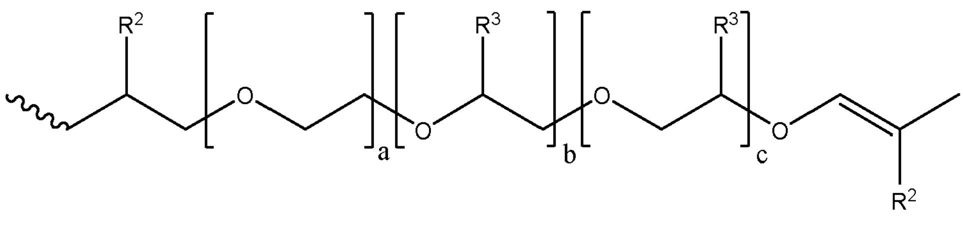

Formel 3,

und wobei die Reste $R^7$ der Formel 4 entsprechen

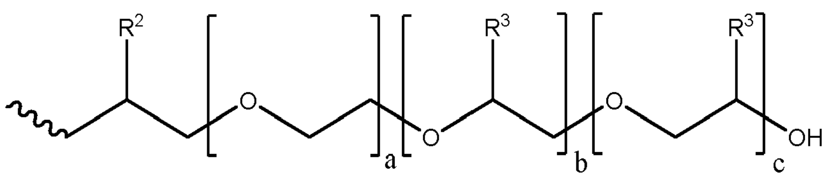

Formel 4,

wobei die Indizes a, b und c, sowie die Reste $R^2$ und $R^3$ wie zuvor definiert, durch Hydrosilylierung von alpha-omega modifizierten Wasserstoff-Siloxanen mit alpha-omega modifizierten Di-(Meth)Allyl-Polyethern in Gegenwart eines Hydrosilylierungskatalysators, welcher die Ausbildung einer SiC-Bindung durch Anlagerung einer Si-H-Gruppe an eine (meth)allylische Doppelbindung zu katalysieren vermag,

wobei die Reaktion in einem Lösemittelgemisch durchgeführt wird, umfassend aromatische Lösemittel, vorzugsweise Toluol und/oder Alkylbenzol, sowie einen Polyether der Formel 5

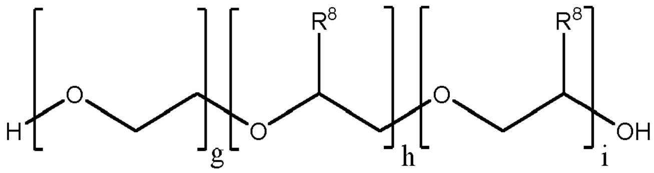
Formel 5,

wobei

g = 0 bis 75, bevorzugt 0 bis 50, besonders bevorzugt 0 bis 25,
h = 1 bis 100, bevorzugt 2 bis 50, besonders bevorzugt 3 bis 25,
i = 1 bis 100, bevorzugt 2 bis 50, besonders bevorzugt 3 bis 25 und

wobei die Reste $R^8$ unabhängig voneinander gleiche oder verschiedene einwertige aliphatische oder aromatische Kohlenwasserstoffreste mit 1 bis 20 Kohlenstoffatomen, bevorzugt Methylreste sind,

sowie alkoxylierten Alkohol der Formel 6

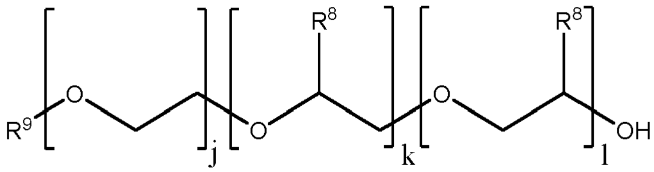
Formel 6,

wobei

j = 0 bis 30, bevorzugt 0 bis 10, besonders bevorzugt 0,
k = 0 bis 20, bevorzugt 0 bis 10, besonders bevorzugt 0 bis 5,
l = 1 bis 20, bevorzugt 2 bis 10, besonders bevorzugt 3 bis 5 und

wobei der Rest $R^9$ ein einwertiger aliphatischer gesättigter oder ungesättigter, linearer oder verzweigter Kohlenwasserstoffrest mit 6 - 40, bevorzugt mit 8 - 30 noch mehr bevorzugt mit 10 - 22 Kohlenstoffatomen ist,

und wobei die Reste $R^8$ wie zuvor definiert sind.

Die Abfolge der unterschiedlichen Oxyalkylen Einheiten, die in den Polyoxyalkylenresten, Polyolen oder Alkoxylierten Alkoholen in eckigen Klammern und mit Kleinbuchstabenindices angegeben sind, kann zufällig (statistisch verteilt), blockweise, graduell variierend oder in abschnittsweise beliebiger Mischung dieser Möglichkeiten erfolgen. Die angegebenen Strukturformeln sind in Bezug auf die Abfolge hier lediglich eine vereinfachende grafische Darstellung.

Das erfindungsgemäße Lösemittelgemisch umfasst also zumindest drei Komponenten nämlich aromatisches Lösemittel, Polyether der Formel 5 sowie alkoxylierten Alkohol der Formel 6.

Zu den Vorteilen des erfindungsgemäßen Verfahrens gehört nicht nur, dass es die Bereitstellung entsprechender Polyether-Siloxan-Blockcopolymere mit hohem Molekulargewicht und gleichzeitig möglichst enger Molgewichts ermöglicht, sondern auch, dass die resultierenden Formulierungen bei einem vergleichsweise hohem Wirkstoffgehalt eine vergleichsweise niedrige Viskosität aufweisen, und somit erhebliche Verarbeitungsvorteile aufweisen.

Ein weiterer Vorteil liegt darin, dass die resultierenden Polyether-Siloxan-Blockcopolymere bei hohem Molekulargewicht eine engen Molgewichtsverteilung aufweisen. So kann insbesondere die Bereitstellung von Polyether-Siloxan-Blockcopolymeren nach Formel 1 mit einem gewichts-mittleren Molgewicht $M_w$ (g/mol) von $\geq 60000$, vorteilhafterweise > 80000, vorzugsweise > 90000, insbesondere > 100000, wobei $M_w/M_n < 3{,}1$, vorzugsweise < 3,0, insbesondere

<2,9 ist, gewährleistet werden. $M_n$ ist das zahlen-mittlere Molgewicht.

Das hohe Molgewicht ist hierbei insbesondere für die erfindungsgemäße Verwendung der beschriebenen Polyether-Siloxan Block-Copolymere als Schaumstabilisator zur Herstellung von Polyurethanschäumen, insbesondere von Polyurethan-Schlagschäumen, vorteilhaft, weil sich hierdurch besonders feinzellige und stabile Schäume herstellen lassen. Auch ist hierdurch ein besonders effizientes mechanisches Aufschäumen von Polyol-Isocyanat-Gemischen möglich, was wiederum eine Reihe prozesstechnischer Vorteile bei der Herstellung von Polyurethan-Schlagschäumen mit sich bringt. Die niedrige Viskosität sowie die enge Molgewichtsverteilung sind in dieser Hinsicht ebenso wertvoll.

Insgesamt steht fest, dass die erfindungsgemäß resultierenden Polyether-Siloxan-Blockcopolymere insbesondere bei der Herstellung von mechanisch aufgeschäumtem PU-Schaum eine herausragende Leistung zeigen. Sie gewährleisten optimale Verarbeitbarkeit und ermöglichen dabei die Bereitstellung von PU-Schäumen höchster Qualität.

Polyether-Siloxan-Blockcopolymere sind an sich bekannt. Der Begriff Polyether umfasst im Sinne der gesamten vorliegenden Erfindung Polyoxyalkylene, wobei insbesondere Polyoxyethylen und Polyoxypropylen sowie Polyoxyethylen-Polyoxypropylen-Mischpolyether bevorzugt sind. Die Verteilung verschiedener Oxyalkylen-Einheiten entlang des Polymerrückgrades kann unterschiedlich sein. Mischpolyether können zum Beispiel statistisch, blockweise oder mit unterschiedlichen Gradienten der Monomereinheiten zueinander aufgebaut sein. Statistischer Aufbau bedeutet in diesem Zusammenhang, das Polyoxyethylen- und Polyoxypropylen-Einheiten in zufälliger Reihenfolge über die Polyetherkette verteilt sind, wohingegen ein blockweise aufgebauter Polyether aus definierten Polyoxyethylen- und Polyoxypropylen-Blöcken besteht.

Der Begriff Siloxan umfasst im Sinne der gesamten vorliegenden Erfindung Verbindungen aus der Klasse der Polyorganosiloxane, insbesondere bevorzugt aus der Klasse der Polydimethyl-Siloxane. Der Begriff Polyether-Siloxan Block-Copolymere umfasst im Sinne der gesamten vorliegenden Erfindung Polymere, welche aus alternierenden Polyether- und Siloxan-Blöcken aufgebaut sind.

Die erfindungsgemäßen Polyether-Siloxan-Blockcopolymere unterliegen der Formel 1.

Der Begriff Polyurethanschaum ist dem Fachmann an sich bekannt (siehe z.B. Adam et al., "Polyurethanes", Ullmann's Encyclopedia of Industrial Chemistry - Paragraph 7", 2012, Wiley VCH-Verlag, Weinheim). Der Begriff Polyurethan-Schlagschaum umfasst im Sinne der gesamten vorliegenden Erfindung Polyurethan-Schäume, welche durch mechanisches Einschlagen von Luft, Stickstoff, $CO_2$ oder sonstige inerte Gase in eine Polyol-Isocyanat-Mischung hergestellt werden, wobei nur geringe Mengen, bevorzugt gar kein zusätzliches physikalisches oder chemisches Treibmittel verwendet werden. Er ist gleichbedeutend mit dem Begriff mechanisch aufgeschäumter Polyurethanschaum.

Die Herstellung der erfindungsgemäßen Polyether-Siloxan Block-Copolymere basiert auf der dem Fachmann bekannten Hydrosilylierungsreaktion und kann durch eine solche Umsetzung von alpha-omega modifizierten Wasserstoff-Siloxanen mit alpha-omega modifizierten Di-(Meth)Allyl-Polyethern erfolgen. Die dieser Herstellung zugrundeliegenden chemischen Reaktionen sind in der Fachliteratur bekannt und dort ausführlich beschrieben (siehe z.B. Silicones - Chemistry and Technology, Vulkan-Verlag Essen, 1989).

Die Erfindung wird nachfolgend weiter und beispielhaft beschrieben, ohne dass die Erfindung auf diese beispielhaften Ausführungsformen beschränkt sein soll. Sind nachfolgend Bereiche, Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Mol Prozentangaben werden mit m-% in abgekürzter Form kenntlich gemacht. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. In der vorliegenden Erfindung dargestellte Struktur und Summenformeln stehen stellvertretend für alle durch unterschiedliche Anordnung der sich wiederholenden Einheiten denkbaren Isomere. Werden im Rahmen der vorliegenden Erfindung Verbindungen, wie z. B. Polyether, Siloxane oder Polyethersiloxane, beschrieben, die verschiedene Einheiten mehrfach aufweisen können, so können diese statistisch verteilt (statistisches Oligomer oder Polymer), geordnet (Blockoligomer oder Blockpolymer) oder als Gradientenverteilung in diesen Verbindungen vorkommen.

Das erfindungsgemäße Lösemittelgemisch umfasst neben aromatischem Lösemittel noch Polyether der Formel 5 sowie alkoxylierten Alkohol der Formel 6. Es entspricht einer bevorzugten Ausführungsform der vorliegenden Erfindung, wenn der Polyether der Formel 5 und der alkoxylierte Alkohol der Formel 6 im Massenverhältnis von1 zu 4 bis 4 zu 1, bevorzugt im Massenverhältnis 1 zu 3 bis 3 zu 1 eingesetzt werden.

Weiterhin ist es bevorzugt, wenn das aromatische Lösemittel, bezogen auf das gesamte eingesetzte Lösemittelgemisch, vorzugsweise umfassend Toluol und/oder Alkylbenzol, in Mengen > 15 Gew.-%, vorzugsweise > 20 Gew.-

%, insbesondere > 30 Gew.-% eingesetzt wird. Auch dies entspricht einer bevorzugten Ausführungsform der vorliegenden Erfindung.

Als Reaktanden werden alpha-omega modifizierte Wasserstoff-Siloxane und alpha-omega modifizierten Di-(Meth)Allyl-Polyether eingesetzt, und zwar in Gegenwart eines Hydrosilylierungskatalysators.

Wenn die Summe der Massen von Polyether der Formel 5 und des alkoxylierten Alkohols der Formel 6 zur Summe der Massen der Reaktanden in einem Verhältnis von 7 zu 3 bis 1 zu 4 beträgt, so liegt eine weitere bevorzugte Ausführungsform der Erfindung vor.

Der alpha-omega modifizierte Di-(Meth)Allyl-Polyether wird vorzugsweise in einer solchen Konzentration eingesetzt wird, dass das molare Verhältnis an polyether-gebundenden Doppelbindungen zu Si-H-Gruppen im Bereich von 0,95 : 1,05 bis 1,05 : 0,95, bevorzugt im Bereich von 0,97 : 1,03 bis 1,03 : 0,97, besonders bevorzugt im Bereich von 0,99 : 1,01 bis 1,01 : 0,99 liegt. Auch dies entspricht einer bevorzugten Ausführungsform der Erfindung.

Die erfindungsgemäße Hydrosilylierung erfolgt in Gegenwart eines Hydrosilylierungskatalysators. Wenn der zur Umsetzung verwendete Hydrosilylierungskatalysator ausgewählt ist aus der Gruppe der Platin-Katalysatoren, insbesondere der Platin(0)-Katalysatoren, wobei insbesondere Platin(0)-Katalysatoren in Form des Karstedt-Katalysators ganz besonders bevorzugt sind, so liegt eine weitere bevorzugte Ausführungsform der Erfindung vor.

Solche Katalysatoren sind bekannt, siehe z.B. Lewis et al., "Platinum Catalysts used in Silicones Industry", Platinum Metal Review, 1997, 44(23), 66-74).

Optional ist es möglich, dass aromatische Lösemittel aus dem Gemisch nach der Hydrosilylierung zu entfernen, z.B. durch Destillation, insbesondere dann, wenn es sich bei dem aromatischen Lösemittel um Toluol handelt. Dies entspricht einer weiteren bevorzugten Ausführungsform des erfindungsgemäßen Verfahrens.

Die durch das erfindungsgemäße Verfahren hergestellten Polyethersiloxane weisen bevorzugt ein gewichtsmittleres Molgewicht Mw von mindestens 60.000 g/mol, bevorzugt von mindestens 70.000 g/mol, besonders bevorzugt von mindestens 80.000 g/mol, auf, sowie ein zahlen-mittleres Molgewicht Mn von mindestens 25000 g/mol, bevorzugt von mindestens 27500 g/mol, besonders bevorzugt von mindestens 30.000 g/mol auf. Darüber hinaus ist es bevorzugt, wenn das Verhältnis von Mw/Mn kleiner 3,1, bevorzugt kleiner 3,0 mehr bevorzugt kleiner 2,9 ist. Die Begriffe gewichtsmittleres Molgewicht Mw und zahlen-mittleres Molgewicht Mn sind dem Fachmann bekannt. Diese beiden Größen lassen sich bevorzugt durch Gel-Permeations-Chromatopgraphie (GPC) bestimmen, vorzugsweise kalibriert gegen Polystyrol. Hierfür kann beispielsweise das GPC-System SECcurity2 der Firma PCC, kalibriert gegen Polystyrol verwendet werden. Insbesondere kann das GPC-System SECcurity 1260 der Firma PCC, bevorzugt mit folgenden experimentellen Rahmenparametern: Säulenkombination SDV 1000/10000 Å, Detektor PSS SECurity 1260 RI, Mobile Phase THF, Fließrate 1 ml/min), kalibriert gegen Polystyrol (162 - 2520000 g/mol) verwendet werden.

Die aus dem erfindungsgemäßen Verfahren erhaltenen Mischungen können erfindungsgemäß zur Herstellung von Polyurethanschäumen, insbesondere von Polyurethan-Schlagschäumen verwendet werden.

Ein weiterer Gegenstand der vorliegenden Erfindung ist somit eine Formulierung, geeignet als Additiv für die Herstellung von Polyurethanschäumen, vorzugsweise PU-Schlagschaum, umfassend die Komponenten

(a) Polyether-Siloxan-Blockcopolymere nach Formel 1

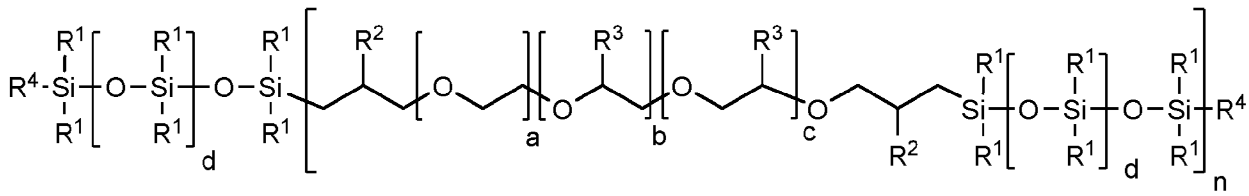

Formel 1

wobei

a = 0 bis 100, bevorzugt 5 bis 75, besonders bevorzugt 10 bis 50,
b = 0 bis 100, bevorzugt 5 bis 75, besonders bevorzugt 5 bis 25,
c = 0 bis 100, bevorzugt 5 bis 75, besonders bevorzugt 5 bis 25,
d = 1 bis 100, bevorzugt 5 bis 50 besonders bevorzugt 7 bis 30 ganz besonders bevorzugt 8 - 20 ist,
n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz

besonders bevorzugt Methylreste sind,

und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,

und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind, und wobei die Reste $R^4$ unabhängig ausgewählt sind aus einem der Reste $R^5$, $R^6$, $R^7$ oder H, wobei die Reste $R^5$ der Formel 2 entsprechen

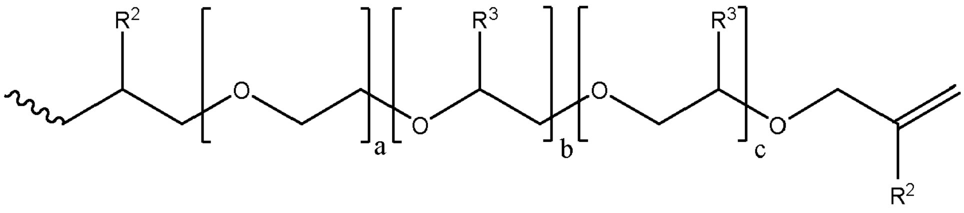
Formel 2,

und wobei die Reste $R^6$ der Formel 3 entsprechen

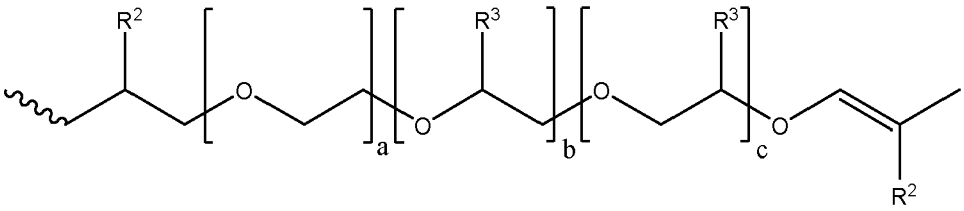
Formel 3,

und wobei die Reste $R^7$ der Formel 4 entsprechen

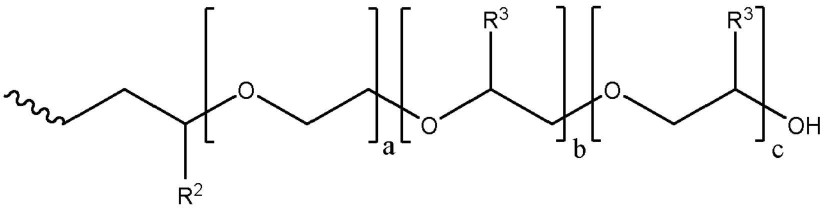
Formel 4,

wobei die Indizes a, b und c, sowie die Reste $R^2$ und $R^3$ wie zuvor definiert,

(b) Polyether der Formel 5

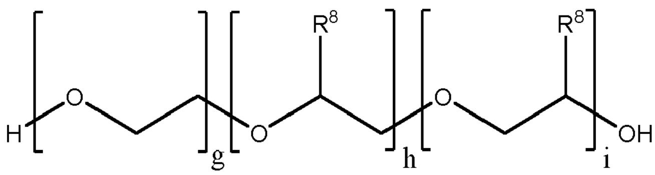
Formel 5,

wobei

g = 0 bis 75, bevorzugt 0 bis 50, besonders bevorzugt 0 bis 25,
h = 1 bis 100, bevorzugt 2 bis 50, besonders bevorzugt 3 bis 25,
i = 1 bis 100, bevorzugt 2 bis 50, besonders bevorzugt 3 bis 25 und

wobei die Reste $R^8$ unabhängig voneinander gleiche oder verschiedene einwertige aliphatische oder aromatische Kohlenwasserstoffreste mit 1 bis 20 Kohlenstoffatomen, bevorzugt Methylreste sind,

(c) alkoxylierter Alkohol der Formel 6

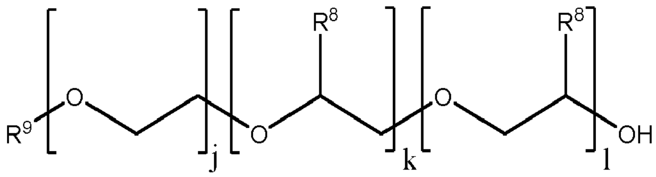

Formel 6.

wobei

j = 0 bis 30, bevorzugt 0 bis 10, besonders bevorzugt 0 bis 5,
k = 1 bis 20, bevorzugt 2 bis 10, besonders bevorzugt 3 bis 5,
l = 1 bis 20, bevorzugt 2 bis 10, besonders bevorzugt 3 bis 5 und

wobei der Rest $R^9$ ein einwertiger aliphatischer gesättigter oder ungesättigter, linearer oder verzweigter Kohlenwasserstoffrest mit 6 - 40, bevorzugt mit 8 - 30 noch mehr bevorzugt mit 10 - 22 Kohlenstoffatomen ist und wobei die Reste $R^8$ unabhängig voneinander gleiche oder verschiedene einwertige aliphatische oder aromatische Kohlenwasserstoffreste mit 1 bis 20 Kohlenstoffatomen, bevorzugt Methylreste sind,

(d) optional aromatische Lösemittel. In einer bevorzugten Ausführungsform enthält die Formulierung im Wesentlichen keine aromatischen Lösemittel, also weniger als 5 Gew.-% aromatische Lösemittel oder weniger als 1 Gew.-% aromatische Lösemittel, oder aber gar keine aromatischen Lösemittel.

Gemäß einer bevorzugten Ausführungsform der Erfindung liegen die Komponenten b) und c) in der Formulierung im Massenverhältnis von 1 zu 4 bis 4 zu 1, bevorzugt im Massenverhältnis 1 zu 3 bis 3 zu 1 vor.

Weiterhin sind Formulierungen bevorzugt, bei denen die Summe der Massen von b) und c) zu a) in einem Verhältnis von 8 zu 2 bis 1 zu 4 liegt. Dies entspricht einer bevorzugten Ausführungsform der Erfindung.

Weiterhin sind Formulierungen bevorzugt, in welchen das Polyether-Siloxan-Blockcopolymer der Formel 1 in einer Konzentration von mindestens 20 Gew.-%, bevorzugt von mindestens 25 Gew.-%, mehr bevorzugt von mindestens 30 Gew.-% bezogen auf die Gesamtformulierung enthalten ist.

Die vorliegende Erfindung ermöglicht, wie bereits gesagt, die Bereitstellung von Polyether-Siloxan-Blockcopolymeren, die hohe Molekulargewichte bei enger Molmassenverteilung aufweisen.

Eine erfindungsgemäße Formulierung mit Polyether-Siloxan-Blockcopolymeren nach Formel 1 mit einem $M_w$ (g/mol) von $\geq 60000$, vorzugsweise $> 70000$, insbesondere $> 80000$, wobei $M_w/M_n < 3{,}1$, vorzugsweise $<3{,}0$, insbesondere $<2{,}9$ ist, entspricht einer besonders bevorzugten Ausführungsform der Erfindung. Wie bereits weiter oben beschrieben, lassen sich $M_w$ und $M_n$ im Rahmen dieser Erfindung bevorzugt durch Gel-Permeations-Chromatopgraphie (GPC) bestimmen, vorzugsweise kalibriert gegen Polystyrol.

Weiterhin kann es bevorzugt sein, wenn die erfindungsgemäße Formulierung als zusätzliche Komponente noch einen seitenständigen Stabilisator umfasst. Seitenständig Stabilisatoren sind hierbei ebenfalls Polyethersiloxane, die jedoch eine Silikonkette aufweisen, welche seitenständige und / oder endständige Polyetherketten trägt. Die Polyetherketten können hierbei sowohl über eine Silizium-Kohlenstoff-Verknüpfung (Si-C) oder eine Silizium-Sauerstoff-Kohlenstoff-Verknüpfung (Si-O-C) an die Silikonkette gebunden sein, wobei Silizium-Kohlenstoff-Verknüpfungen besonders bevorzugt sind. Insbesondere sind hierbei solche seitenständige Si-C-basierten Polyethersiloxane bevorzugt, welche der Formel 7 entsprechen,

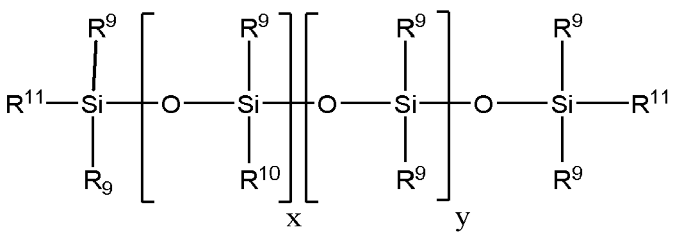

Formel 7

wobei

x = 0 bis 50, bevorzugt 1 bis 25, besonders bevorzugt 2 bis 15,

y = 0 bis 250, bevorzugt 5 bis 150, besonders bevorzugt 5 bis 100,

wobei die Reste $R^9$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste $R^{10}$ unabhängig voneinander gleiche oder verschiedene OH-funktionelle oder terminierte, bevorzugt Methyl- oder Acetyl-terminierte Polyoxyalkylenreste, vorzugsweise Polyoxyethylenpolyoxypropylenreste, sind, und wobei die Reste $R^{11}$ entweder $R^9$ oder $R^{10}$ entsprechen.

Die erfindungsgemäßen Formulierungen sind erhältlich durch das erfindungsgemäße Verfahren wie zuvor beschrieben, und optional anschließender Abtrennung des aromatischen Lösemittels, insbesondere, wenn es sich bei diesem um Toluol handelt. Zusätzliche Komponenten wie insbesondere ein seitenständiger Stabilisator gemäß Formel 7 können extra zugegeben werden.

Da, wie oben beschrieben, die erfindungsgemäßen Polyether-Siloxan Block-Copolymere effiziente Stabilisatoren für die Herstellung von Polyurethan-Schäumen, insbesondere von Polyurethan-Schlagschäumen sind, ist die Verwendung der erfindungsgemäßen Formulierungen als Additive, insbesondere als schaumstabilisierendes Additiv, zur Herstellung von Polyurethanschäumen, vorzugsweise PU-Schlagschäumen ebenfalls Gegenstand der vorliegenden Erfindung, insbesondere in Kombination mit seitenständigem Stabilisator gemäß Formel 7.

Wenn es sich bei dem herzustellenden Polyurethanschaum um einen mechanisch geschäumten Polyurethanschaum handelt, welcher weniger als 2 Gew.-%, bevorzugt weniger als 1 Gew.-%, besonders bevorzugt weniger als 0,5 Gew.-%, ganz besonders bevorzugt weniger als 0,1 Gew.-% eines chemischen oder physikalischen Treibmittels enthält, so liegt eine besonders bevorzugte Ausführungsform der Erfindung vor.

Ein weiterer Gegenstand dieser Erfindung ist somit auch ein Polyurethanschaum, vorzugsweise PU-Schlagschaum, hergestellt unter Einsatz einer erfindungsgemäßen Formulierung wie zuvor beschrieben.

Der Begriff Polyurethanschaum bezeichnet im Rahmen dieser Erfindung Schaumstoffe, welche durch Umsetzung von Polyisocyanaten mit ihnen gegenüber reaktiven Verbindungen, bevorzugt mit OH-Gruppen ("Polyole") und/oder NH-Gruppen, gebildet werden (Adam et al., "Polyurethanes", Ullmann's Encyclopedia of Industrial Chemistry", 2012, Wiley VCH-Verlag, Weinheim). Polyole zur Herstellung entsprechender Schäume sind an sich bekannt. Besonders geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole können durch Umsetzung von mehrwertigen Alkoholen oder Aminen mit Alkylenoxiden gewonnen werden. Polyesterpolyole basieren auf Estern mehrwertiger Carbonsäuren (meist Phthalsäure, Adipinsäure oder Terephthalsäure) mit mehrwertigen Alkoholen (meist Glycolen). Weiterhin bevorzugte Polyole sind kurzkettige Diole, wie z.B. Ethylenglycol, Propylenglycol, Diethylenglycol oder Diproyplenglycol die Beispielsweise als Kettenverlängere eingesetzt werden können.

Isocyanate zur Herstellung von Polyurethan-Schäumen sind an sich ebenfalls bekannt. Vorzugsweise weist die Isocyanat-Komponente ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet sind weiterhin Isocyanat-basierte Prepolymere, insbesondere MDI-basierte Prepolymere.

Das Verhältnis von Isocyanat zu Polyol, ausgedrückt als NCO-Index, liegt im Rahmen der vorliegenden Erfindung vorzugsweise im Bereich von 40 bis 500, bevorzugt 60 bis 350, besonders bevorzugt 80 - 120. Der NCO-Index beschreibt dabei das Verhältnis von tatsächlich eingesetztem Isocyanat zu berechnetem Isocyanat (für eine stöchiometrische Umsetzung mit Polyol). Ein NCO-Index von 100 steht für ein molares Verhältnis der reaktiven Gruppen von 1 zu 1.

Neben den erfindungsgemäßen Polyether-Siloxan Block-Copolymere können die Polyurethane noch weitere Additive und Zusatzstoffe, wie z.B. Füllstoffe, Treibmittel, Katalysatoren, organische und anorganische Pigmente, Stabilisatoren, wie z.B. Hydrolyse- oder UV-Stabilisatoren, Antioxidantien, Absorber, Vernetzer, Farbstoffe, Emulgatoren oder Dispergieradditive, Verlaufshilfsmittel oder Verdicker / Rheologie-Additive enthalten.

Als Katalysatoren zur Herstellung von Polyurethan-Schäumen, insbesondere von Polyurethan-Schlagschäumen im Sinne der vorliegenden Erfindung sind Gel-Katalysatoren, die die Polyurethanreaktion zwischen Isocyanat und Polyol katalysieren, besonders geeignet. Diese können ausgewählt sein aus der Klasse der Amin-Katalysatoren, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol, Tetramethylguanidin, und 1,8-Diazabicyclo[5.4.0]undec-7-en. Weiterhin können Aminkatalysatoren ausgewählt sein aus der Klasse der sogenannten emissionsfreie Aminkatalysatoren, welche dadurch gekennzeichnet sind, dass sie ein katalytisch aktives Stickstoffatom und eine gegenüber NCO-Gruppen reaktive Gruppe, wie z.B. eine OH-Gruppe aufweisen. Entsprechende emissionsfreie Aminkatalysatoren werden Beispielsweise unter der Produktreihe Dabco® NE von der Firma Evonik vertrieben. Weiterhin können die Katalysatoren ausgewählt sein aus der Klasse der Metall-Katalysatoren, wie z.B. Zinn, Zink, Bismuth, Eisen, Kupfer, Nickel, oder Zirkonium-basierte Katalysatoren. Metallkatalysatoren können hierbei in Form von Salzen oder als organisch Derivate vorliegen. Die oben genannten Katalysatoren können sowohl pur als auch als Katalysatormischungen verwendet werden. Im Fall von Polyurethan-Schlagschäumen, sind thermolatente Katalysatoren, sprich Katalysatoren, die ihre Wirksamkeit erst ab einer bestimmten Aktivierungstemperatur entfalten und so ein verzögertes Aushärten der Schäume ermöglichen, besonders geeinigt.

Im Rahmen der vorliegenden Erfindung handelt es sich bei den Polyurethanschäumen bevorzugt um Polyurethan-Schlagschäume, welche durch mechanisches Aufschlagen der Polyol-Isocyanat-Mischung hergestellt werden. Bevorzugt enthalten solche Schlagschäume weniger als 2 Gew.-%, besonders bevorzugt weniger als 1 Gew.-%, insbesondere bevorzugt weniger als 0,5 Gew.-%, ganz besonders bevorzugt weniger als 0,1 Gew.-% eines chemischen oder physikalischen Treibmittels. Ganz besonders bevorzugt enthalten die Polyurethanschäume gar kein physikalisches oder chemisches Treibmittel.

Wie bereits beschrieben ist die Verwendung der erfindungsgemäßen Polyether-Siloxan Block-Copolymere enthaltenden Formulierungen zur Herstellung von Polyurethan-Schlagschäumen ein besonders bevorzugter Gegenstand der vorliegenden Erfindung. Bevorzugt lassen sich solche Polyurethan-Schlagschäume durch ein Verfahren herstellen umfassend die Schritte

a) Bereitstellen einer Polyol-Komponente, einer Isocyanat-Komponente, einer erfindungsgemäße Polyether-Siloxan Block-Copolymere enthaltenden Formulierung sowie ggf. weitere Additive,
b) Vermischung aller Komponenten zur einer homogenen Mischung,
c) mechanisches Aufschäumen der Mischung unter Einbringen eines Gases, wie z.B. Luft oder Stickstoff, zu einem homogenen, feinzelligen Schaum,
d) Aufbringen der aufgeschäumten Reaktionsmischung auf ein Substrat,
e) Aushärten der aufgeschäumten Reaktionsmischung.

Es wird klargestellt, dass die Verfahrensschritte dieses Verfahrens wie oben dargestellt keiner festen zeitlichen Abfolge unterworfen sind. So können beispielsweise Verfahrensschritt b) und c) zeitgleich stattfinden, sprich einzelne Komponenten werden erst während des Aufschäumvorgangs zur Reaktionsmischung gegeben und mit dieser vermischt. Auch können einzelne Additive, wie z.B. der Katalysator, erst nach dem Verfahrensschritt c) zur mechanisch aufgeschäumten Reaktionsmischung gegeben werden.

Es entspricht einer bevorzugten Ausführungsform der vorliegenden Erfindung, wenn im Verfahrensschritt c) die Reaktionsmischung aus Polyol, Isocyanat und ggf. weiteren Additiven durch das Aufbringen hoher Scherkräfte aufgeschäumt wird. Das Aufschäumen kann hierbei unter Zuhilfenahme von dem Fachmann geläufigen Scheraggregaten wie z.B. Dispermaten, Dissolvern, Hansa-Mixern oder Oakes-Mixern erfolgen.

Weiterhin ist es bevorzugt, wenn die mechanisch aufgeschäumte Reaktionsmischung nach dem Verfahrensschritt c) eine Dichte im Bereich von 50 - 1000 g/l, bevorzug im Bereich von 75 - 600 g/l, besonders bevorzugt im Bereich von 100 - 450 g/l aufweist.

Im Verfahrensschritt d) kann die Reaktionsmischung auf nahezu jedes beliebige Substrat aufgebracht werden, wie z.B. auf Teppichrückseiten, die Rückseite von Kunstrasen, Klebebeschichtungen, textile Träger, Trenn-Papiere oder Trennfolien sowie auf Metalle, entweder zum permanenten Verbleib auf dem Metall oder zur späteren Entnahme der ausgehärteten Reaktionsmischung.

Es ist weiterhin bevorzugt, wenn im Verfahrensschritt e) die aufgeschäumte Reaktionsmischung bei erhöhter Temperaturen ausgehärtet wird. Erfindungsgemäß bevorzugt sind hierbei Aushärtetemperaturen von min. 50 °C, bevorzugt von 60 °C, mehr bevorzugt von mindestens 70 °C.

Die Verwendung eines erfindungsgemäßen Polyurethanschaums, vorzugsweise PU-Schlagschaums, wie zuvor beschrieben, zur Herstellung von Bodenbelägen wie Teppichen, Trittschalldämmungen oder Kunstrasen, sowie zur Herstellung von Textilbeschichtungen oder von Dichtungsmaterialien, gap filler, shock pads oder compression pads ist ein weiterer Gegenstand der Erfindung.

Wie bereits zuvor beschrieben, zeichnen sich die durch das erfindungsgemäße Verfahren erhältlichen Polyethersiloxane durch ein besonders vorteilhaftes Molgewicht sowie durch eine besonders vorteilhafte Molgewichtsverteilung aus, wodurch sie besonders geeignet sind, als Additiv für die Herstellung von Polyurethanschäumen, vorzugsweise PU-Schlagschaum eingesetzt zu werden. Ein weiterer Gegenstand der vorliegenden Erfindung sind daher Polyether-Siloxan-Blockcopolymere, welche der Formel 1 entsprechen

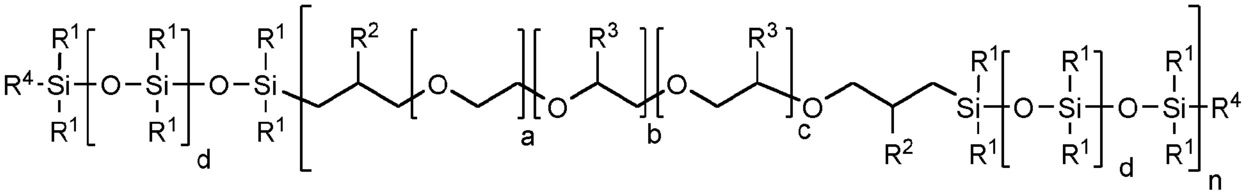

Formel 1

wobei

- a = 0 bis 100, bevorzugt 5 bis 75, besonders bevorzugt 10 bis 50,
- b = 0 bis 100, bevorzugt 5 bis 75, besonders bevorzugt 5 bis 25,
- c = 0 bis 100, bevorzugt 5 bis 75, besonders bevorzugt 5 bis 25,
- a + b + c > 3,
- d = 1 bis 100, bevorzugt 5 bis 50 besonders bevorzugt 7 bis 30 ganz besonders bevorzugt 8 - 20 ist,
- n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,

und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,

und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind,

und wobei die Reste $R^4$ unabhängig ausgewählt sind aus einem der Reste $R^5$, $R^6$, $R^7$ oder H, wobei die Reste $R^5$ der Formel 2 entsprechen

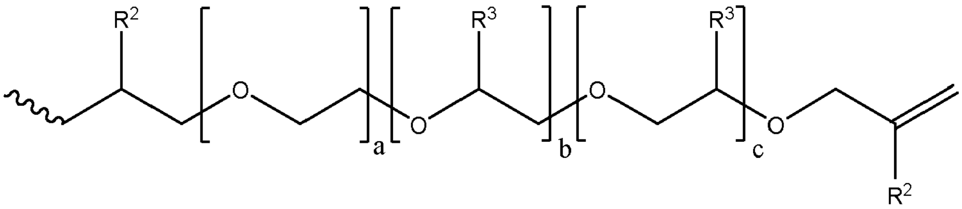

Formel 2,

und wobei die Reste $R^6$ der Formel 3 entsprechen

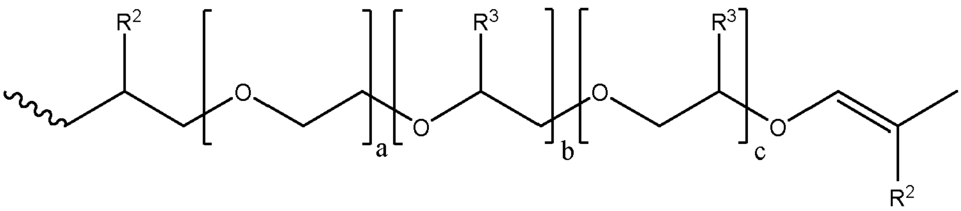

Formel 3,

und wobei die Reste $R^7$ der Formel 4 entsprechen

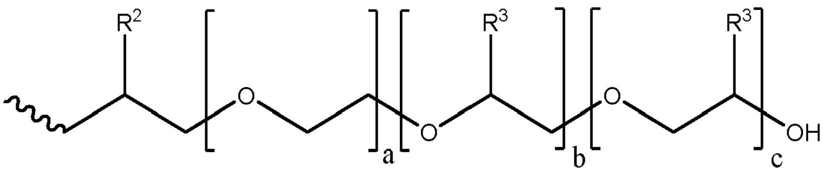

Formel 4,

wobei die Indizes a, b und c, sowie die Reste $R^2$ und $R^3$ wie zuvor definiert,

und welche ein gewichts-mittleres Molgewicht Mw von mindestens 60.000 g/mol, bevorzugt von mindestens 70.000 g/mol, besonders bevorzugt von mindestens 80.000 g/mol, sowie ein zahlen-mittleres Molgewicht Mn von mindestens 25000 g/mol, bevorzugt von mindestens 27500 g/mol, besonders bevorzugt von mindestens 30.000 g/mol aufweisen, wobei insbesondere bevorzugt ist, wenn das Verhältnis von Mw/Mn kleiner 3,1, bevorzugt kleiner 3,0 mehr bevorzugt kleiner 2,9 ist. Bevorzugt lassen sich diese Polyether-Siloxan-Blockcopolymere durch das erfindungsgemäße Verfahren, wie zuvor ausführlich beschrieben, herstellen.

Noch ein Gegenstand der vorliegenden Erfindung ist die Verwendung dieser erfindungsgemäßen Polyether-Siloxan-Blockcopolymere als Additive für die Herstellung von Polyurethanschäumen, vorzugsweise PU-Schlagschäumen, insbesondere in Kombination mit mindestens einem zusätzlichen Polyethersiloxan-basierter Stabilisator, welcher eine Siloxankette aufweist, die seitenständige und/oder endständige Polyetherketten trägt, wobei die Polyetherketten sowohl über eine Silizium-Kohlenstoff-Verknüpfung (Si-C) oder eine Silizium-Sauerstoff-Kohlenstoff-Verknüpfung (Si-O-C) an die Silikonkette gebunden sein können, wobei Silizium-Kohlenstoff-Verknüpfungen besonders bevorzugt sind und wobei insbesondere solche seitenständigen Si-C-basierten Polyethersiloxane bevorzugt sind, welche der Formel 7 entsprechen, wie zuvor bereits definiert,
wobei in diesem Zusammenhang vollumfänglich auf die vorangegangene Beschreibung verwiesen sei.

**Beispiele:**

OH-Zahl-Messung:

Alle OH-Zahl-Messungen wurden nach folgender Methode durchgeführt. Hierfür wird die zu untersuchende Substanz zunächst mit einer definierten Menge Essigsäureanhydrid acetyliert. Die überschüssige Menge an Essigsäureanhydrid wird anschließend mit Wasser hydrolysiert und die Menge an freigesetzter Essigsäure durch Titration gegen Phenolphthalein mit 0.5 n Kalilauge in Ethanol ermittelt. Zusätzlich wird ein Blindversuch nach gleicher Vorschrift, jedoch ohne die zu untersuchende Substanz durchgeführt. Die OH-Zahl der Probe ergibt sich dann gemäß folgender

Formel:

$$\mathrm{OH-Zahl} = \frac{(b-a)\cdot 28{,}05}{E}$$

a = verbrauchte ml 0,5 n Kalilauge im Hauptversuch
b = verbrauchte ml 0,5 n Kalilauge im Blindversuch
E = Einwaage in g

Materialien:

a) SiH-Siloxan A

Bei den folgenden Synthesen kam ein Siloxan der allgemeinen Formel a zum Einsatz.

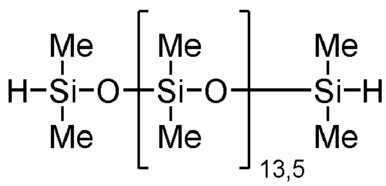

Formel a: SiH-Siloxan A.

Wie bei Siloxanpolymeren üblich, enthalten linearen Siloxaneketten auch zu einem gewissen Anteil cyclische Siloxane, zum Beispiel Octamethylcyclotetrasiloxan. Das im Rahmen der Versuche eingesetzte SiH-Siloxan enthält zum Beispiel 4,2 m-% Octamethylcyclotetrasiloxan und 2,8 m-% Decamethylcyclopentasiloxan

b) Bismethallylpolytether A

Bei den folgenden Synthesen wurde ein Polyether der allgemeinen Formel b eingesetzt.

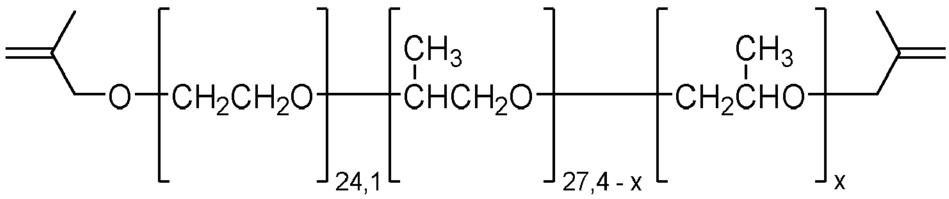

Formel b: Bismethallylpolyether A.

Der Bismethallylpolyether A wurde mit Methoden nach dem Stand der Technik durch Umsetzung von dem entsprechenden Polyetherdiol mit Methallylchlorid hergestellt. Die Rest OH-Zahl war < 1 mg KOH/100 g.

c) Polyether der Formel 5

Im Rahmen der Synthese wurde als Polyether der Formel 5 ein Polyetherdiol Lupranol® 1200 eingesetzt (CAS-Nummer 25322-69-4). Lupranol ® 1200 ist ein zweifunktionelles Polyetherol der Firma BASF Polyurethanes GmbH mit einer Hydroxyzahl von ca. 250 mg KOH/g bestimmt nach DIN 53240.

d) Alkoxylierten Alkohol der Formel 6
Im Rahmen der Synthese wurde als alkoxylierter Alkohol der Formel 6 Varonic® APM T eingesetzt. Varonic® APM T ist ein PPG-3 Myristyl Ether der Firma Evonik. Die allgemeine Formel von Varonic® APM T ist in Formel c dargestellt.

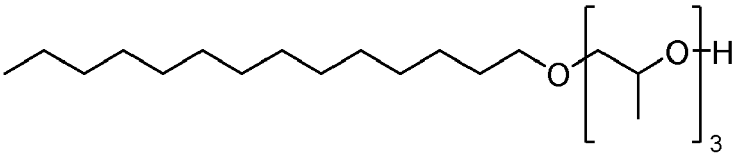

Formel c: Strukturformel von Varonic® APM T.

e) Karstedt-Katalysator-Lösung
Als Katalysator wurde eine Lösung des Karstedt-Katalysators (1,3-Divinyl-1,1,3,3-tetramethyldisiloxanplatin(0)) in Decamethylcyclopentasiloxan eingesetzt. Der Platingehalt w (Pt) betrug 0.6 %.

Synthese-Beispiele:

Beispiel 1: Synthese in Toluol

In einem 500 mL-Dreihalskolben mit KPG-Rührer und Rückflusskühler wurden 73 g des Bismethallylpolyethers A vorgelegt. Anschließend wurden 103 g Toluol und 30 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Es entstand ein gelartiges Produkt, welches zwischendurch mit weiteren 103 g Toluol weiter verdünnt wurde, um es rührfähig zu halten.

Es wurde ein klares gelartiges Produkt erhalten. Aufgrund der sehr hohen Viskosität konnte das Lösemittel nicht destillativ entfernt werden.

Beispiel 2: Synthese in Toluol/Polypropylenglykol

In einem 1000 mL-Dreihalskolben mit KPG-Rührer und Rückflusskühler wurden 73 g des Bismethallylpolyethers A vorgelegt. Anschließend wurden 103 g Toluol, 103 g Lupranol® 1200 und 30 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Anschließend wurden die flüchtigen Bestandteile im Vakuum bei 130 °C und 1 mbar entfernt.

Es wurde ein stark trübes Produkt erhalten.

Beispiel 3: Synthese in Toluol/Alkoxylierter Alkohol

In einem 1000 mL-Dreihalskolben mit KPG-Rührer und Rückflusskühler wurden 73 g des Bismethallylpolyethers A vorgelegt. Anschließend wurden 103 g Toluol, 103 g Varonic® APM T und 30 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Anschließend wurden die flüchtigen Bestandteile im Vakuum bei 130 °C und 1 mbar entfernt.

Es wurde ein stark trübes Produkt erhalten.

Beispiel 4: Synthese in Toluol / Polypropylenglykol/Alkoxylierter Alkohol

In einem 1000 mL-Dreihalskolben mit KPG-Rührer und Rückflusskühler wurden 73 g des Bismethallylpolyethers A vorgelegt. Anschließend wurden 103 g Toluol, 77 g Lupranol® 1200, 26 g Varonic® APM T und 30 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Anschließend wurden die flüchtigen Bestandteile im Vakuum bei 130 °C und 1 mbar entfernt.

Es wurde ein klares Produkt erhalten.

Beispiel 5: Synthese in Toluol/Polypropylenglykol/Alkoxylierter Alkohol

In einem 1000 mL-Dreihalskolben mit KPG-Rührer und Rückflusskühler wurden 73 g des Bismethallylpolyethers A vorgelegt. Anschließend wurden 103 g Toluol, 26 g Lupranol® 1200, 77 g Varonic® APM T und 30 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Anschließend wurden die flüchtigen Bestandteile im Vakuum bei 130 °C und 1 mbar entfernt.

Es wurde ein klares Produkt erhalten.

Beispiel 6: Synthese in Toluol/Polypropylenglykol/Alkoxylierter Alkohol

In einem 1000 mL-Dreihalskolben mit KPG-Rührer und Rückflusskühler wurden 146 g des Bismethallylpolyethers A vorgelegt. Anschließend wurden 206 g Toluol, 103 g Lupranol® 1200, 103 g Varonic® APM T und 60 g des SiH-Siloxans A zugesetzt. Das Reaktionsgemisch wurde auf 80 °C erwärmt. Danach wurden 10 ppm Pt in Form der Karstedt-Katalysator-Lösung zugesetzt. Das Reaktionsgemisch wurde auf 95 °C erwärmt und für 3 Stunden bei dieser Temperatur gerührt. Anschließend wurden die flüchtigen Bestandteile im Vakuum bei 130 °C und 1 mbar entfernt.

Es wurde ein klares Produkt erhalten.

Von allen Proben versuchen wurden die Molgewichte der erhaltenen Polyethersiloxane mittels Gel-Permeations-Chromatopgraphie (GPC) bestimmen. Hierfür wurde das GPC-System SECcurity2 der Firma PCC, kalibriert gegen Polystyrol verwendet. Die aus diesen Messungen erhaltenen mittlere Molgewicht Mw und Mn sind in Tabelle 1 aufgeführt. Außerdem wurden die Viskositäten alle Proben gemessen. Hierfür wurde eine Brookfieldviskosimeter Brookfield LV ausgerüstet mit einer Spindel #64 verwendet. Aller Messungen, bei denen Viskositäten über 100000 mPas gemessen wurden, wurden bei 2,5 rpm durchgeführt. Aller Messungen, bei denen Viskositäten unter 100000 mPas gemessen wurden, wurden bei 10 rpm durchgeführt. Die so erhaltenen Werte sind ebenfalls in Tabelle 1 aufgelistet.

Tabelle 1: Versuchsübersicht.

| Beispiel | w (SiH-Siloxan + Bismethallylpolyether) /% | w (Toluol)/ % | w (Lupranol 1200)/ % | w (Varonic® APM T) /% | Mw/ (g/mol) | Mw/Mn | Viskosität/ (mPa s) | Aussehen |
|---|---|---|---|---|---|---|---|---|
| 1 | 50,00 | 50,00 | 0,0 | 0,0 | 164254 | 3,71 | gelartig | Gel |
| 2 | 33,34 | 33,33 | 33,33 | 0,0 | 128219 | 3,47 | 96000 | stark Trübe |
| 3 | 33,34 | 33,33 | 0,0 | 33,33 | 100461 | 3,11 | 60300 | Leicht Trübe |
| 4 | 33,34 | 33,33 | 24,92 | 8,41 | 119853 | 3,06 | 189600 | Klar |
| 5 | 33,34 | 33,33 | 8,41 | 24,92 | 118783 | 2,97 | 102400 | Klar |
| 6 | 33,34 | 33,33 | 16,66 | 16,67 | 104606 | 2,84 | 41050 | Klar |

Es zeigte sich, dass die Breite der Molgewichtverteilung deutlich abnimmt, wenn die Reaktion in Gegenwart eines Lösemittels bestehend aus Toluol, des Polyethers Lupranol® 1200 und des alkoxylierten Alkohols Varonic® APM T durchgeführt wird. Auch waren die erhaltenen Produkte klar. Die Breite der Molgewichtsverteilung lässt sich hierbei aus dem Verhältnis Mw/Mn ablesen. Je größer dieses ist, desto breiter ist die Molgewichtsverteilung, wobei im Fall der hier beschriebenen nicht erfindungsgemäßen Proben (Beispiel 1-3) bei einem hohen Mw/Mn-Wert ein Tailing der Molgewichtsverteilung zu sehr hohen Molgewichten beobachtet werden konnte.

Wird auf das Polyetherdiol oder den alkoxylierten Alkohol verzichtet, so erhält man trübe Produkte und die erhaltenen Polyethersiloxane weisen eine breitere Molgewichtsverteilung auf. Wird Toluol als alleiniges Lösemittel verwendet, werden zwar klare Produkte erhalten, welche jedoch eine noch breitere Molgewichtsverteilung aufweisen. Bedingt hierdurch waren die erhaltenen Produkte gelartig und nicht mehr fließfähig

Auch trübe Produkte sind nicht erwünscht, da je nach Länge der Lagerung es zu Separationen kommen kann. Uneinheitliche Produkte erschweren Produktionsprozesse.

Polyurethan-Formulierung:

Zur Beurteilung der Wirksamkeit der in den Beispielen 1 - 6 hergestellten Polyether-Siloxan BlockCopolymeren als Stabilisator für die Herstellung von Polyurethan-Schlagschäumen, wurde eine Reihe an Testverschäumungen durchgeführt. Für diese wurde die in Tabelle beschriebene Polyurethanformulierung verwendet:

**Tabelle1:** Übersicht über in Verschäumungsexperimenten verwendete Formulierung.

| Polyol | Hersteller / Lieferant | Zusammensetzung | Gewichts-Teile |
|---|---|---|---|
| Voranol® CP 3322 | Dow | EO/PO-Polyetherpolyol OHZ = 48 mg KOH/g; f ≈ 3 | 140 |
| Voralux® HN 360 | Dow | SAN-Polymer Polyetherpolyol OHZ = 30 mg KOH/g, f ≈ 3 | 60 |
| DPG | Sigma Aldrich | Dipropylenglykol OHZ = 836 mg KOH/g, f = 2 | 30 |
| KOSMOS® N 200 | Evonik | Nickel-(II)-Acetylacetonate Katalysator | 4 |
| Stabilisator | | Aus Beispiel 1 - 6 | 4 |
| Omya® BLS | Omya GmbH | $CaCO_3$ - Füllstoff | 230 |
| Suprasec® 6505 | Huntsman | Polymeres MDI NCO-% = 29,3 % | 92 Index = 105 |

Beispiel 7: Maschinen-Verschäumungen:

Maschinen-Verschäumungen wurden mit einem vollautomatischen Labor-Schaumgenerator, Typ *Pico-Mix XL* von der Firma *Hansa-Mixer,* ausgerüstet mit 2 separaten Exzenterschnecken-Trichterpumpen, durchgeführt. Hierfür wurde zunächst eine Vormischung (Ansatzgröße ca. 5 kg) aus Polyolen, Stabilisator, Katalysator Calcium-Carbonat hergestellt und anschließend in eine der beiden Trichterpumpen des Schaumgenerators gefüllt. Die andere Trichterpumpe wurde mit der Isocyanat-Komponente befüllt. Hierbei wurde die in Tabelle 1 beschriebene Formulierung verwendet. Für Verschäumungsexperimente wurden Polyol-Vormischung und Isocyanat gleichzeitig in den Mischkopf des Schaumgenerators eingedüst und dort durch gleichzeitiges Einleiten von Luft aufgeschäumt. Der Mischkopf wurde hierbei bei allen Experimenten bei 850 rpm betrieben. Die Förderleistungen der beiden Trichterpumpen wurde stets so eingestellt, dass Polyol und Isocyanat im passenden Verhältnis (entsprechend dem NCO-Index der Formulierung) in den Mischkopf eingedüst wurden, der Gesamtmassenfluss betrug 9 kg/h. Der Luftstrom in den Mischkopf wurde so gewählt, dass nach dem Aufschäumen Schaumdichten von 250 und 300 g/l erhalten wurden. Die Homogenität und Stabilität des erhaltenen Schaums nach Austritt aus dem Mischkopf war ein Bewertungskriterium für die Wirksamkeit des Schaumstabilisators. Die aufgeschäumte Reaktionsmischung wurde anschließend mit einem Labor-Streichtisch / -Trockner, *Labcoater LTE-S* von der Firma *Mathis AG,* auf ein beschichtetes Trennpapier gestrichen (Schichtstärke 6 mm) und für 15 min. bei 120 °C ausgehärtet. Zellstruktur und Zellhomogenität des ausgehärteten Schaums waren ein weiteres Bewertungskriterium für die Wirksamkeit des Schaumstabilisators.

**Tabelle 2:** Resultate von Maschinen-Verschäumungen

| (Bewertung von - - = sehr schlecht, über o = mittel bis ++ = sehr gut) | | |
|---|---|---|
| | **250 g/l** | **300 g/l** |
| **Polyether-Siloxan in Toluol (Beispiel 1)** | | |
| Schaumstabilität<br>Schaumhomogenität | -<br>-- | ○<br>- |
| **Polyether-Siloxan in Toluol / Polypropylenglykol (Beispiel 2)** | | |
| Schaumstabilität<br>Schaumhomogenität | <br>-- | <br>- |
| **Polyether-Siloxan in Toluol / Alkoxyliertem Alkohol (Beispiel 3)** | | |
| Schaumstabilität<br>Schaumhomogenität | -<br>○ | ○<br>○ |
| **Polyether-Siloxan in Toluol / Polypropylenglykol / Alkoxyliertem Alkohol (Beispiel 4)** | | |
| Schaumstabilität<br>Schaumhomogenität | ○<br>+ | +<br>+ |
| **Polyether-Siloxan in Toluol / Polypropylenglykol / Alkoxyliertem Alkohol (Beispiel 5)** | | |
| Schaumstabilität<br>Schaumhomogenität | +<br>+ | ++<br>++ |
| **Polyether-Siloxan in Toluol / Polypropylenglykol / Alkoxyliertem Alkohol (Beispiel 6)** | | |
| Schaumstabilität<br>Schaumhomogenität | ++<br>++ | ++<br>++ |

Wie aus der Zusammenstellung in Tabelle 2 ersichtlich ist, weisen Schäume, welche erfindungsgemäße Polyether-Siloxan-Blockcopolymere hergestellt nach dem erfindungsgemäßen Verfahren umfassen, eine verbesserte Schaumstabilität sowie eine feinere und homogenere Zellstruktur auf. Im Gegensatz hierzu ergaben die nicht erfindungsgemäßen Stabilisatoren aus Beispiel 1-3 recht grobe und irreguläre Schäume, mit verminderter Stabilität, was sich z.B. durch Zellvergröberung beim Aushärten der Schäume zeigte. Die Verschäumungsergebnisse belegen somit eindeutig die verbesserte Wirksamkeit der über das erfindungsgemäße Verfahren hergestellten Schaumstabilisatoren.

## Patentansprüche

1. Verfahren zur Herstellung von Polyether-Siloxan-Blockcopolymeren nach Formel 1

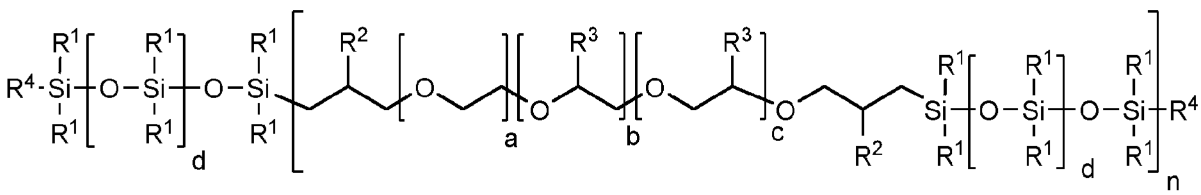

Formel 1

wobei

a = 0 bis 100, bevorzugt 5 bis 75, besonders bevorzugt 10 bis 50,
b = 0 bis 100, bevorzugt 5 bis 75, besonders bevorzugt 5 bis 25,

c = 0 bis 100, bevorzugt 5 bis 75, besonders bevorzugt 5 bis 25,
a + b + c > 3,
d = 1 bis 100, bevorzugt 5 bis 50 besonders bevorzugt 7 bis 30 ganz besonders bevorzugt 8 -20 ist,
n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,
und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,
und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind,
und wobei die Reste $R^4$ unabhängig ausgewählt sind aus einem der Reste $R^5$, $R^6$, $R^7$ oder H, wobei die Reste $R^5$ der Formel 2 entsprechen

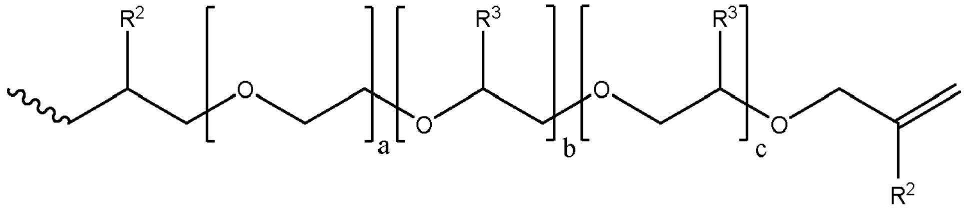
Formel 2,

und wobei die Reste $R^6$ der Formel 3 entsprechen

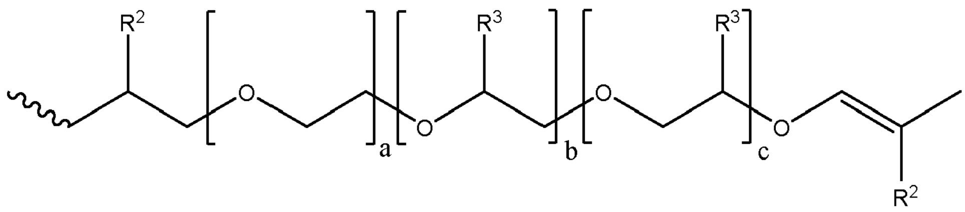
Formel 3,

und wobei die Reste $R^7$ der Formel 4 entsprechen

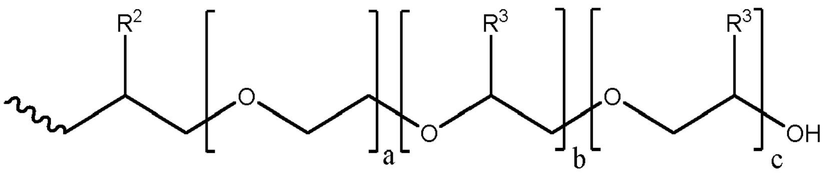
Formel 4,

wobei die Indizes a, b und c, sowie die Reste $R^2$ und $R^3$ wie zuvor definiert,
durch Hydrosilylierung von alpha-omega modifizierten Wasserstoff-Siloxanen mit alpha-omega modifizierten Di-(Meth)Allyl-Polyethern in Gegenwart eines Hydrosilylierungskatalysators, welcher die Ausbildung einer SiC-Bindung durch Anlagerung einer Si-H-Gruppe an eine (meth)allylische Doppelbindung zu katalysieren vermag, **dadurch gekennzeichnet, dass** die Reaktion in einem Lösemittelgemisch durchgeführt wird, umfassend aromatische Lösemittel, vorzugsweise Toluol und/oder Alkylbenzol, einen Polyether der Formel 5

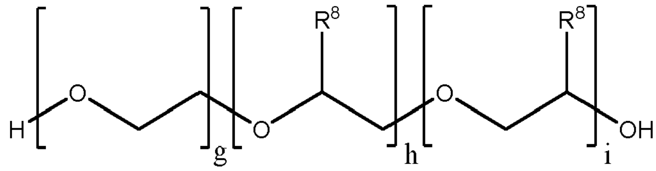

Formel 5,

wobei

g = 0 bis 75, bevorzugt 0 bis 50, besonders bevorzugt 0 bis 25,
h = 1 bis 100, bevorzugt 2 bis 50, besonders bevorzugt 3 bis 25,
i = 1 bis 100, bevorzugt 2 bis 50, besonders bevorzugt 3 bis 25 und

wobei die Reste $R^8$ unabhängig voneinander gleiche oder verschiedene einwertige aliphatische oder aromatische Kohlenwasserstoffreste mit 1 bis 20 Kohlenstoffatomen, bevorzugt Methylreste sind,
sowie alkoxylierten Alkohol der Formel 6

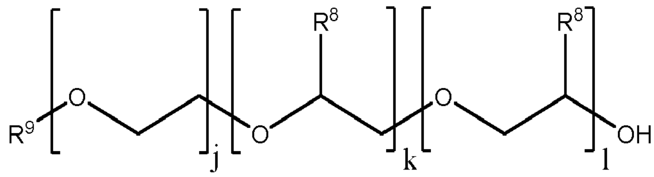

Formel 6

wobei

j = 0 bis 30, bevorzugt 0 bis 10, besonders bevorzugt 0,
k = 0 bis 20, bevorzugt 0 bis 10, besonders bevorzugt 0 bis 5,
l = 1 bis 20, bevorzugt 2 bis 10, besonders bevorzugt 3 bis 5 und

wobei der Rest $R^9$ ein einwertiger aliphatischer gesättigter oder ungesättigter, linearer oder verzweigter Kohlenwasserstoffrest mit 6 - 40, bevorzugt mit 8 - 30, insbesondere bevorzugt mit 10 - 22 Kohlenstoffatomen ist, und wobei die Reste $R^8$ wie zuvor definiert sind.

2. Verfahren nach Anspruch 1, **dadurch gekennzeichnet, dass** der Polyether der Formel 5 und der alkoxylierte Alkohol der Formel 6 im Massenverhältnis von 1 zu 4 bis 4 zu 1, bevorzugt im Massenverhältnis 1 zu 3 bis 3 zu 1 eingesetzt werden.

3. Verfahren nach Anspruch 1 oder 2, **dadurch gekennzeichnet, dass** das aromatische Lösemittel, bezogen auf das gesamte eingesetzte Lösemittelgemisch, vorzugsweise umfassend Toluol und/oder Alkylbenzol, in Mengen > 15 Gew.-%, vorzugsweise > 20 Gew.-%, insbesondere > 30 Gew.-% eingesetzt wird.

4. Verfahren nach einem der Ansprüche 1 bis 3, **dadurch gekennzeichnet, dass** die Summe der Massen von Polyether der Formel 5 und des alkoxylierten Alkohols der Formel 6 zur Summe der Massen der Reaktanden in einem Verhältnis von 8 zu 2 bis 1 zu 4 liegt.

5. Verfahren nach einem der Ansprüche 1 bis 4, **dadurch gekennzeichnet, dass** der alpha-omega modifizierte Di-(Meth)Allyl-Polyether in einer solchen Konzentration eingesetzt wird, dass das molare Verhältnis an polyethergebundenden Doppelbindungen zu siloxan-gebundenen Si-H-Gruppen im Bereich von 0,95 : 1,05 bis 1,05 : 0,95, bevorzugt im Bereich von 0,97 : 1,03 bis 1,03 : 0,97, besonders bevorzugt im Bereich von 0,99 : 1,01 bis 1,01 : 0,99 liegt.

6. Verfahren nach einem der Ansprüche 1 bis 5, **dadurch gekennzeichnet, dass** der zur Umsetzung verwendete Hydrosilylierungskatalysator ausgewählt ist aus der Gruppe der Platin-Katalysatoren, insbesondere der Platin(0)-Katalysatoren, wobei Platin(0)-Katalysatoren in Form des Karstedt-Katalysators ganz besonders bevorzugt sind.

7. Formulierung, geeignet als Additiv für die Herstellung von Polyurethanschäumen, vorzugsweise PU-Schlagschaum, umfassend die Komponenten

(a) Polyether-Siloxan-Blockcopolymere nach Formel 1

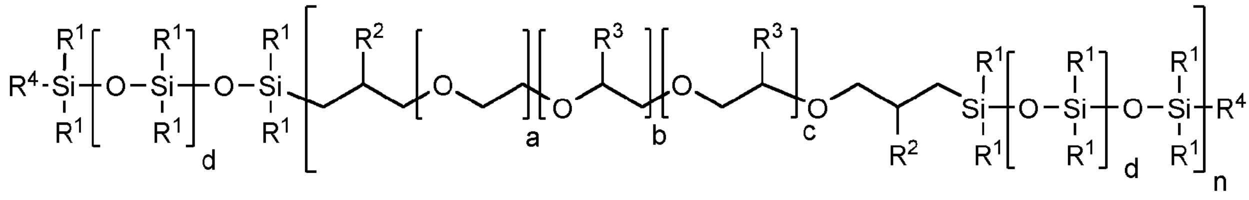

Formel 1

wobei

a = 0 bis 100, bevorzugt 5 bis 75, besonders bevorzugt 10 bis 50,
b = 0 bis 100, bevorzugt 5 bis 75, besonders bevorzugt 5 bis 25,
c = 0 bis 100, bevorzugt 5 bis 75, besonders bevorzugt 5 bis 25,
d = 1 bis 100, bevorzugt 5 bis 50 besonders bevorzugt 7 bis 30 ganz besonders bevorzugt 8 - 20 ist,
n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,
und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,
und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind,
und wobei die Reste $R^4$ unabhängig ausgewählt sind aus einem der Reste $R^5$, $R^6$, $R^7$ oder H, wobei die Reste $R^5$ der Formel 2 entsprechen

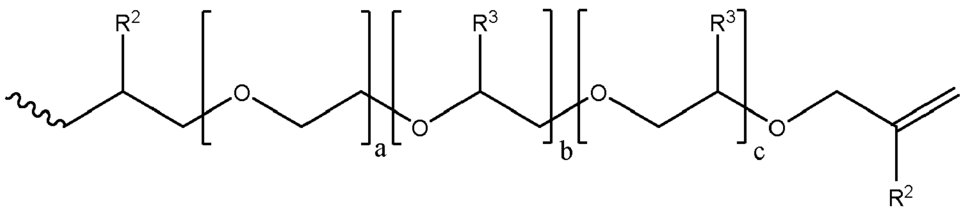

Formel 2,

und wobei die Reste $R^6$ der Formel 3 entsprechen

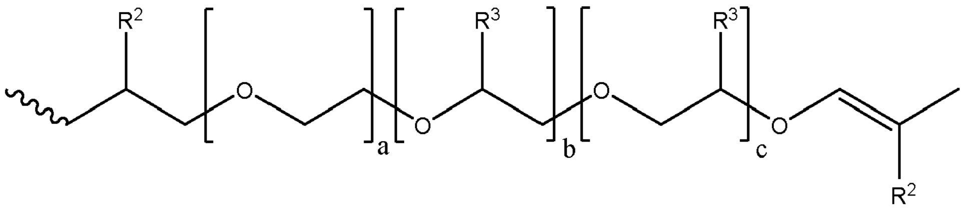

Formel 3,

und wobei die Reste $R^7$ der Formel 4 entsprechen

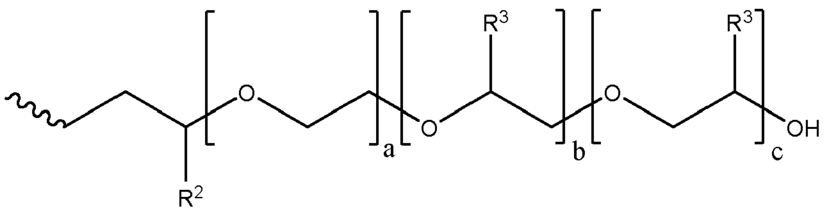

Formel 4,

wobei die Indizes a, b und c, sowie die Reste $R^2$ und $R^3$ wie zuvor definiert,

(b) Polyether der Formel 5

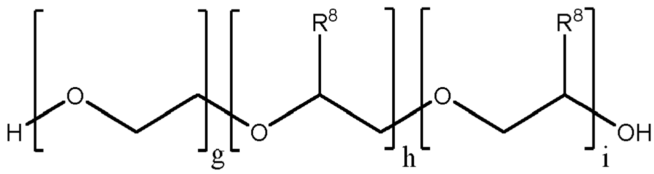

Formel 5,

wobei

g = 0 bis 75, bevorzugt 0 bis 50, besonders bevorzugt 0 bis 25,
h = 1 bis 100, bevorzugt 2 bis 50, besonders bevorzugt 3 bis 25,
i = 1 bis 100, bevorzugt 2 bis 50, besonders bevorzugt 3 bis 25 und

wobei die Reste $R^8$ unabhängig voneinander gleiche oder verschiedene einwertige aliphatische oder aromatische Kohlenwasserstoffreste mit 1 bis 20 Kohlenstoffatomen, bevorzugt Methylreste sind,

(c) alkoxylierter Alkohol der Formel 6

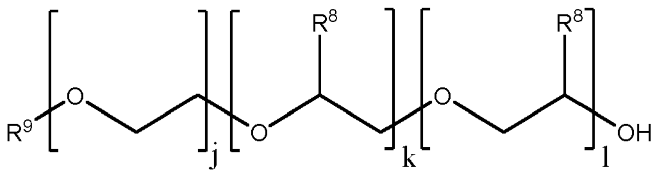

Formel 6,

wobei

j = 0 bis 30, bevorzugt 0 bis 10, besonders bevorzugt 0 bis 5,
k = 1 bis 20, bevorzugt 2 bis 10, besonders bevorzugt 3 bis 5,
l = 1 bis 20, bevorzugt 2 bis 10, besonders bevorzugt 3 bis 5 und

wobei der Rest $R^9$ ein einwertiger aliphatischer gesättigter oder ungesättigter, linearer oder verzweigter Kohlenwasserstoffrest mit 6 - 40, bevorzugt mit 8 - 30 noch mehr bevorzugt mit 10 - 22 Kohlenstoffatomen ist, und wobei die Reste $R^8$ wie zuvor definiert sind, und

(d) optional aromatische Lösemittel.

8. Formulierung gemäß Anspruch 7, **dadurch gekennzeichnet, dass** die Komponenten b) und c) im Massenverhältnis von 1 zu 4 bis 4 zu 1, bevorzugt im Massenverhältnis 1 zu 3 bis 3 zu 1 vorliegen.

9. Formulierung gemäß Anspruch 7 oder 8, **dadurch gekennzeichnet, dass** die Summe der Massen von b) und c) zu a) in einem Verhältnis von 8 zu 2 bis 1 zu 4 liegt.

10. Formulierung gemäß einem der Ansprüche 7 bis 9, **dadurch gekennzeichnet, dass** Polyether-Siloxan-Blockcopolymere nach Formel 1 ein $M_w$ (g/mol) von $\geq$ 60000, vorteilhafterweise >80000, vorzugsweise > 90000, insbesondere > 100000 hat, wobei $M_w/M_n$ < 3,1, vorzugsweise < 3,0, insbesondere < 2,9 ist.

11. Formulierung gemäß einem der Ansprüche 7 bis 10, **dadurch gekennzeichnet, dass** als zusätzliche Komponente mindestens ein seitenständiger Polyethersiloxan-basierter Stabilisator verwendet wird, welcher eine Siloxankette aufweist, die seitenständige und/oder endständige Polyetherketten trägt, wobei die Polyetherketten sowohl über eine Silizium-Kohlenstoff-Verknüpfung (Si-C) oder eine Silizium-Sauerstoff-Kohlenstoff-Verknüpfung (Si-O-C) an die Silikonkette gebunden sein können, wobei Silizium-Kohlenstoff-Verknüpfungen besonders bevorzugt sind und wobei insbesondere solche seitenständigen Si-C-basierten Polyethersiloxane bevorzugt sind, welche der Formel 7 entsprechen

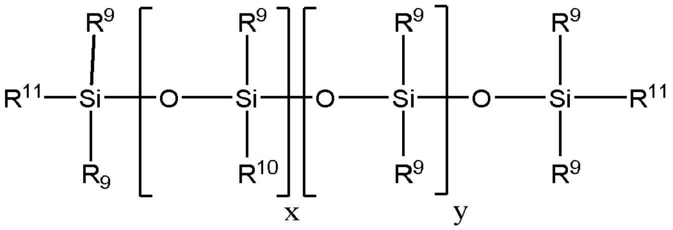

Formel 7

wobei

x = 0 bis 50, bevorzugt 1 bis 25, besonders bevorzugt 2 bis 15,
y = 0 bis 250, bevorzugt 5 bis 150, besonders bevorzugt 5 bis 100,

wobei die Reste $R^9$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste $R^{10}$ unabhängig voneinander gleiche oder verschiedene OH-funktionelle oder terminierte, bevorzugt Methyl- oder Acetyl-terminierte Polyoxyalkylenreste, vorzugsweise Polyoxyethylenpolyoxypropylenreste, sind, und wobei die Reste $R^{11}$ entweder $R^9$ oder $R^{10}$ entsprechen.

**12.** Formulierung gemäß einem der Ansprüche 7 bis 11, erhältlich durch ein Verfahren nach einem der Ansprüche 1 bis 6 und optional anschließender Abtrennung des Toluols.

**13.** Polyether-Siloxan-Blockcopolymer, bevorzugt hergestellt nach einem Verfahren gemäß mindestens einem der Ansprüchen 1-6, welches der Formel 1 entspricht

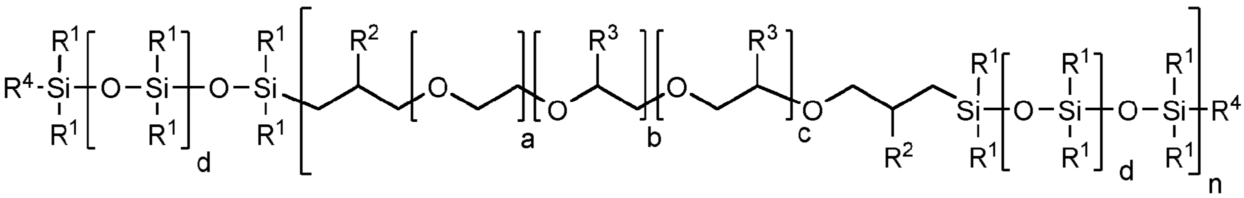

Formel 1

wobei

a = 0 bis 100, bevorzugt 5 bis 75, besonders bevorzugt 10 bis 50,
b = 0 bis 100, bevorzugt 5 bis 75, besonders bevorzugt 5 bis 25,
c = 0 bis 100, bevorzugt 5 bis 75, besonders bevorzugt 5 bis 25,
a + b + c > 3,
d = 1 bis 100, bevorzugt 5 bis 50 besonders bevorzugt 7 bis 30 ganz besonders bevorzugt 8 -20 ist,
n = 5 - 200, bevorzugt 10 - 100, besonders bevorzugt 15 - 50 und

wobei die Reste $R^1$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,
und wobei die Reste $R^2$ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind,
und wobei die Reste $R^3$ unabhängig voneinander gleiche oder verschiedene einwertige aliphatische oder aromatische Kohlenwasserstoffreste mit 1 bis 20 Kohlenstoffatomen, bevorzugt Methylreste sind,
und wobei die Reste $R^4$ unabhängig ausgewählt sind aus einem der Reste $R^5$, $R^6$, $R^7$ oder H, wobei die Reste $R^5$ der Formel 2 entsprechen

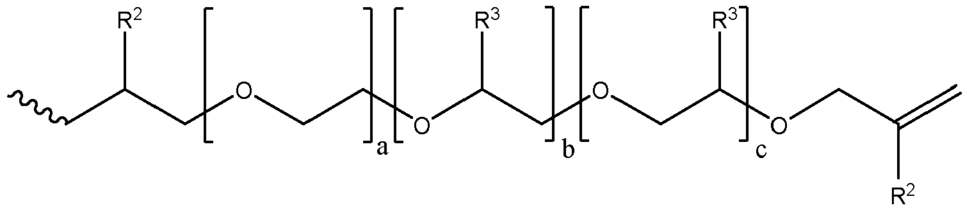

Formel 2,

und wobei die Reste $R^6$ der Formel 3 entsprechen

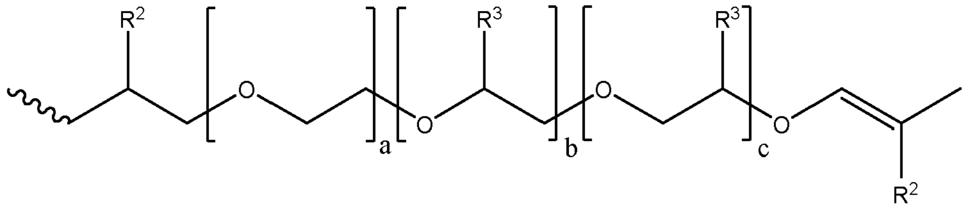

Formel 3,

und wobei die Reste $R^7$ der Formel 4 entsprechen

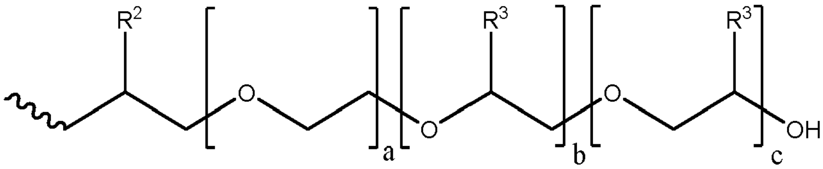

Formel 4,

wobei die Indizes a, b und c, sowie die Reste $R^2$ und $R^3$ wie zuvor definiert,

und welches ein gewichts-mittleres Molgewicht Mw von mindestens 60.000 g/mol, bevorzugt von mindestens 70.000 g/mol, besonders bevorzugt von mindestens 80.000 g/mol, sowie ein zahlen-mittleres Molgewicht Mn von mindestens 25000 g/mol, bevorzugt von mindestens 27500 g/mol, besonders bevorzugt von mindestens 30.000 g/mol aufweist, wobei insbesondere bevorzugt ist, wenn das Verhältnis von Mw/Mn kleiner 3,1, bevorzugt kleiner 3,0 mehr bevorzugt kleiner 2,9 ist.

**14.** Verwendung von Formulierungen gemäß einem der Ansprüche 7 bis 12 und / oder eines Polyether-Siloxan-Blockcopolymers gemäß Anspruch 13 als Additiv zur Herstellung von Polyurethanschäumen, vorzugsweise PU-Schlagschäumen,

insbesondere in Kombination mit mindestens einem zusätzlichen Polyethersiloxan-basierter Stabilisator, welcher eine Siloxankette aufweist, die seitenständige und / oder endständige Polyetherketten trägt, wobei die Polyetherketten sowohl über eine Silizium-Kohlenstoff-Verknüpfung (Si-C) oder eine Silizium-Sauerstoff-Kohlenstoff-Verknüpfung (Si-O-C) an die Silikonkette gebunden sein können, wobei Silizium-Kohlenstoff-Verknüpfungen besonders bevorzugt sind und wobei insbesondere solche seitenständigen Si-C-basierten Polyethersiloxane bevorzugt sind, welche der Formel 7 entsprechen

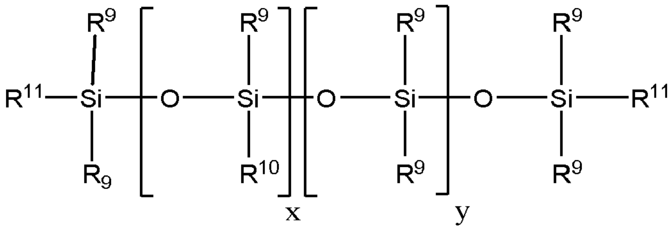

Formel 7

wobei

x = 0 bis 50, bevorzugt 1 bis 25, besonders bevorzugt 2 bis 15,
y = 0 bis 250, bevorzugt 5 bis 150, besonders bevorzugt 5 bis 100,

wobei die Reste $R^9$ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste $R^{10}$ unabhängig voneinander gleiche oder verschiedene OH-funktionelle oder terminierte, bevorzugt Methyl- oder Acetyl-terminierte Polyoxyalkylenreste, vorzugsweise Polyoxyethylenpolyoxypropylenreste, sind, und wobei die Reste $R^{11}$ entweder $R^9$ oder $R^{10}$ entsprechen.

**15.** Verwendung nach Anspruch 14, wobei es sich bei dem herzustellenden Polyurethanschaum um einen mechanisch geschäumten Polyurethanschaum handelt, welcher weniger als 2 Gew.-%, bevorzugt weniger als 1 Gew.-%, besonders bevorzugt weniger als 0,5 Gew.-%, ganz besonders bevorzugt weniger als 0,1 Gew.-% eines chemischen oder physikalischen Treibmittels enthält.

**16.** Polyurethanschaum, vorzugsweise PU-Schlagschaum, hergestellt unter Einsatz einer Formulierung gemäß einem der Ansprüche 7 bis 12 und/oder eines Polyether-Siloxan-Blockcopolymers gemäß Anspruch 13, insbesondere nach den Maßgaben zumindest eines der Ansprüche 14 oder 15.

**17.** Verwendung eines Polyurethanschaums, vorzugsweise PU-Schlagschaums, gemäß Anspruch 16 zur Herstellung von Bodenbelägen wie Teppichen, Trittschalldämmungen oder Kunstrasen, sowie zur Herstellung von Textilbeschichtungen oder von Dichtungsmaterialien, Gap Filler, Shock Pads oder Compression Pads.

Europäisches Patentamt
European Patent Office
Office européen des brevets

# EUROPÄISCHER RECHERCHENBERICHT

Nummer der Anmeldung
EP 21 21 1863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>A | US 5 869 727 A (CRANE WILLIAM E [US] ET AL) 9. Februar 1999 (1999-02-09)<br>* Seite 4, Zeile 29 - Seite 11, Zeile 10 *<br>* Beispiel 3 *<br>----- | 7-9,11, 12,14-17<br>1-6,10, 13 | INV.<br>C08G77/46<br>C08L75/04<br>C08L83/04<br>C08L83/12<br>C08J9/12 |
| X<br>A | EP 3 536 735 A1 (EVONIK DEGUSSA GMBH [DE]) 11. September 2019 (2019-09-11)<br>* Anspruch 7 *<br>* Absatz [0020] - Absatz [0039] *<br>* Beispiel 1 (Vergleichsbeispiel) *<br>----- | 7-9,11, 12,14-17<br>1-6,10, 13 | |

RECHERCHIERTE SACHGEBIETE (IPC)

C08G
C08L
C08J

Der vorliegende Recherchenbericht wurde für alle Patentansprüche erstellt

2

| Recherchenort | Abschlußdatum der Recherche | Prüfer |
|---|---|---|
| Den Haag | 3. Mai 2022 | Stinchcombe, John |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 21 21 1863

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2022

| Im Recherchenbericht angeführtes Patentdokument | Datum der Veröffentlichung | Mitglied(er) der Patentfamilie | Datum der Veröffentlichung |
|---|---|---|---|
| US 5869727 A | 09-02-1999 | BR 9815761 A | 26-12-2000 |
| | | CA 2242303 A1 | 08-02-1999 |
| | | CN 1208741 A | 24-02-1999 |
| | | DE 69827083 T2 | 03-03-2005 |
| | | EP 0896015 A1 | 10-02-1999 |
| | | JP 4319711 B2 | 26-08-2009 |
| | | JP H11116670 A | 27-04-1999 |
| | | US 5869727 A | 09-02-1999 |
| EP 3536735 A1 | 11-09-2019 | CN 111819223 A | 23-10-2020 |
| | | EP 3536735 A1 | 11-09-2019 |
| | | ES 2834450 T3 | 17-06-2021 |
| | | JP 2021517179 A | 15-07-2021 |
| | | KR 20200128073 A | 11-11-2020 |
| | | US 2021047474 A1 | 18-02-2021 |
| | | WO 2019170360 A1 | 12-09-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3957842 A
- US 4150048 A
- US 5869727 A
- US 20190233646 A


### In der Beschreibung aufgeführte Nicht-Patentliteratur


- Polyurethanes. **ADAM et al.** Ullmann's Encyclopedia of Industrial Chemistry - Paragraph 7. Wiley VCH-Verlag, 2012
- Silicones - Chemistry and Technology. Vulkan-Verlag, 1989
- **LEWIS et al.** Platinum Catalysts used in Silicones Industry. *Platinum Metal Review,* 1997, vol. 44 (23), 66-74
- Polyurethanes. **ADAM et al.** Ullmann's Encyclopedia of Industrial Chemistry. Wiley VCH-Verlag, 2012
- *CHEMICAL ABSTRACTS,* 25322-69-4